# EUROPEAN PATENT SPECIFICATION

(11) **EP 1 388 567 B1**
(45) Date of publication and mention of the grant of the patent: **06.09.2006**
(21) Application number: 03102272.6
(22) Date of filing: 23.07.2003
(51) Int. Cl.: C08L 21/00

(54) **Starch composite reinforced rubber composition and tire with at least one component thereof**
Mit einem Verbundmaterial auf Stärkebasis verstärkte Gummimischung und Reifen mit mindestens einem Bestandteil hergestellt aus dieser Mischung
Composition de caoutchouc renforcée par un matériau composite à base d'amidon et pneu comportant au moins un élément à base de cette composition

(30) Priority: 30.07.2002 US 399508 P
(43) Date of publication of application: 11.02.2004
(73) Proprietor: THE GOODYEAR TIRE & RUBBER COMPANY, Akron, Ohio 44316-0001 (US)
(72) Inventor: Weydert, Marc, 1145 Luxembourg (LU); Frank, Uwe Ernst, 66646, Marpingen (DE); Zimmer, René Jean, 1232 Howald (LU); Corvasce, Filomeno Gennaro, 9170 Mertzig (LU)
(74) Representative: Kutsch, Bernd

(56) References cited:
- EP-A- 0 795 581
- EP-A- 0 995 775
- EP-A- 1 241 379
- EP-A- 1 312 639
- US-A- 5 300 569

## Description

### Field of the Invention

The present invention relates to a rubber composition containing at least one diene-based elastomer, a starch/plasticizer composite and an adduct of maleic anhydride and polybutadiene, and to pneumatic tires having at least one component comprised of such rubber composition. Such tire component can be, for example, its circumferential tread or other component of the tire.

### Background of the Invention

Starch has sometimes been suggested for use in elastomer formulations for various purposes. It is considered herein that elastomer formulations, or compositions, containing starch can be developed by utilizing a suitable plasticizer in combination with the starch as will be hereinafter discussed. Such starch/plasticizer compositions might be used alone or in conjunction with silica and/or carbon black reinforcing fillers or also with other fillers such as, for example, recycled, or ground, vulcanized rubber particles, short fibers, kaolin clay, mica, talc, titanium oxide and limestone. Such short fibers can be, for example, fibers of cellulose, aramid, nylon, polyester and carbon composition.

US-A- 5,403,923, 5,258,430, and 4,900,361 disclose the preparation and use of various starch compositions.

Starch is typically represented as a carbohydrate polymer having repeating units of amylose (anhydroglucopyranose units joined by glucosidic bonds) and amylopectin, a branched chain structure, as is well known to those having skill in such art. Typically, starch is composed of 25 percent amylose and 75 percent amylopectin. (The Condensed Chemical Dictionary, Ninth Edition (1977), revised by G. G. Hawley, published by Van Nostrand Reinhold Company, Page 813). Starch can be, reportedly, a reserve polysaccharide in plants such as, for example, corn, potatoes, rice and wheat as typical commercial sources.

In one aspect, starch has previously been suggested for use in rubber products. However, starch by itself, typically having a softening point of 200°C or above, is considered herein to have a somewhat limited use in many rubber products, primarily because rubber compositions are normally processed by preliminarily blending rubber with various ingredients at temperatures in a range of 140°C to 170°C, usually at least 160°C, and sometimes up to 180°C which is not a high enough temperature to cause the starch (with softening temperature of at least 200°C) to effectively melt and efficiently blend with the rubber composition. As a result, the starch particles tend to remain in individual domains, or granules, within the rubber composition rather than as a more homogeneous blend.

Thus, it is considered herein that such softening point disadvantage has rather severely limited the use of starch as a filler, particularly as a reinforcing filler, for many rubber products.

It is considered herein that a development of a starch/plasticizer composition, or compositions, with a softening point significantly lower than that of the starch alone may allow the starch to be more easily mixed and processed in conventional elastomer processing equipment.

As to reinforcement for various rubber compositions which require high strength and abrasion resistance, particularly applications such as tires and various industrial products, sulfur cured rubber is utilized which normally contain substantial amounts of reinforcing fillers, often in a range of 35 to 85 or even up to 120, parts by weight per 100 parts rubber (phr).

Carbon black, and sometimes silica, usually precipitated silica, is commonly used as reinforcing filler for such purpose and normally provide or enhance good physical properties for the sulfur cured rubber. Particulate silica, when used for such purpose, is often used in conjunction with a coupling agent and usually in combination with carbon black. The use of carbon black and silica as reinforcing fillers for elastomers, including sulfur curable elastomers, is well known to those skilled in such art.

It is important to appreciate that, conventionally, carbon black is a considerably more effective reinforcing filler for rubber products, and particularly for rubber tire treads than silica if the silica is used without a coupling agent, or silica coupler or silica adhesion agent as it may be sometimes referred to herein. Use of coupling agents with precipitated silica for reinforcing sulfur curable elastomers is well known to those skilled in such art.

Such coupling agents contain two moieties, one moiety to interact chemically or physicochemically with the reinforcing filler, apparently, for example, with hydroxyl groups on its surface (e.g. SiOH), and another moiety to interact with one or more of the elastomers, particularly diene-based, sulfur curable elastomers. Such coupling agent may, for example, be premixed, or pre-reacted, with the silica particles or added to the rubber mix during a rubber/silica processing, or mixing, stage. If the coupling agent and silica are added separately to the rubber mix during the rubber/silica mixing, or processing stage, it is considered that the coupling agent then combines in situ with the silica.

In particular, such coupling agents are sometimes composed of a silane which has a constituent component, or moiety, (the silane portion) capable of reacting with the silica surface (e.g. SiOH) and, also, a constituent component, or moiety, capable of reacting with the rubber, particularly a sulfur vulcanizable rubber which contains carbon-to-carbon double bonds, or unsaturation such as, for example, a diene-based elastomer. In this manner, then the coupler acts as a connecting bridge between the silica and the rubber and thereby enhances the rubber reinforcement aspect of the silica.

In one aspect, the silane of the coupling agent apparently forms a bond to the silica surface and the rubber reactive component of the coupling agent combines with the rubber itself. Usually the rubber reactive component of the coupler is temperature sensitive and tends to combine with the rubber during the final and higher temperature sulfur vulcanization stage and, thus, subsequent to the rubber/silica/coupler mixing stage and, therefore, after the silane group of the coupler has combined with the silica.

The rubber-reactive group component of the coupler may be, for example, one or more of groups such as mercapto, amino, vinyl, epoxy, and sulfur groups, and is often a sulfur or mercapto moiety and more usually sulfur.

Numerous coupling agents are taught for use in combining silica and rubber, such as, for example, silane coupling agents containing a polysulfide component, or structure, such as, for example, trialkoxyorganosilane polysulfides containing from 2 to 8 sulfur atoms in a polysulfide bridge such as, for example, bis-(3-triethoxysilylpropyl) tetrasulfide and/or trisulfide.

The use of such silane coupling agents may be undesirable due to concerns about the emissions of ethanol or other volatile materials during production processes. It is desirable, therefore, to provide an alternative to the use of silane coupling agents, while maintaining or surpassing the performance of the silane.

EP-A-1312639 (published only on 21.05.2003) relates to a rubbber composition comprising a functionalized elastomer which contains a dispersion of a starch/plasticizer composite and a coupling agent.

EP-A-795 581 relates to a rubber composition comprising a dispersion of a starch/plasticizer composite and a coupling agent.

The term "phr" if used herein, and according to conventional practice, refers to "parts of a respective material per 100 parts by weight of rubber, or elastomer".

In the description of this invention, the terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

The term "carbon black" as used herein means "carbon blacks having properties typically used in the reinforcement of elastomers, particularly sulfur curable elastomers".

The term "silica" as used herein can relate to precipitated or fumed silica and typically relates to precipitated silica, which is well known to those having skill in such art.

A reference to a Tg of an elastomer refers to its glass transition temperature, which can conveniently be determined by a differential scanning calorimeter at a heating rate of 10°C per minute.

### Summary and Practice of the Invention

In accordance with one aspect of this invention, a rubber composition is provided which comprises 100 parts by weight of at least one diene-based elastomer; from 1 to 60 phr of a starch/synthetic plasticizer composite; and from 0.1 to 10 phr of an adduct of maleic anhydride and polybutadiene.

As used herein, the starch/synthetic plasticizer composite may be composed of amylose units and amylopectin units in a ratio of 15/85 to 35/65, alternatively 20/80 to 30/70, and has a softening point according to ASTM No. D1228 in a range of 180°C to 220°C; and the starch/plasticizer has a softening point in a range of 110°C to 170°C according to ASTM No. D1228.

The adduct of maleic anhydride and polybutadiene is generally considered herein as being capable of reacting with at least one or more hydroxyl groups on the surfaces of the starch/plasticizer composite and silica surfaces and possibly with other reactive groups thereon.

In the practice of this invention, the starch/plasticizer composite may be desired to be used, for example, as a free flowing, dry powder or in a free flowing, dry pelletized form. In practice, it is desired that the synthetic plasticizer itself is compatible with the starch, and has a softening point lower than the softening point of the starch so that it causes the softening of the blend of the plasticizer and the starch to be lower than that of the starch alone. This phenomenon of blends of compatible polymers of differing softening points having a softening point lower than the highest softening point of the individual polymer(s) in the blend is well known to those having skill in such art.

For the purposes of this invention, the plasticizer effect for the starch/plasticizer composite, (meaning a softening point of the composite being lower than the softening point of the starch), can be obtained through use of a polymeric plasticizer such as, for example, poly(ethylenevinyl alcohol) with a softening point of less than 160°C. Other plasticizers, and their mixtures, are contemplated for use in this invention, provided that they have softening points of less than the softening point of the starch, and preferably less than 160°C, which might be, for example, one or more copolymers and hydrolyzed copolymers thereof selected from ethylene-vinyl acetate copolymers having a vinyl acetate molar content of from 5 to 90, alternatively 20 to 70, percent, ethylene-glycidal acrylate copolymers and ethylene-maleic anhydride copolymers. As hereinbefore stated hydrolysed forms of copolymers are also contemplated. For example, the corresponding ethylene-vinyl alcohol copolymers, and ethylene-acetate vinyl alcohol terpolymers may be contemplated so long as they have a softening point lower than that of the starch and preferably lower than 160°C.

In general, the blending of the starch and plasticizer involves what are considered or believed herein to be relatively strong chemical and/or physical interactions between the starch and the plasticizer.

In general, the starch/plasticizer composite has a desired starch to plasticizer weight ratio in a range of 0.5/1 to 4/1, alternatively 1/1 to 3/1, so long as the starch/plasticizer composition has the required softening point range, and preferably, is capable of being a free flowing, dry powder or extruded pellets, before it is mixed with the elastomer(s).

While the synthetic plasticizer(s) may have a viscous nature at room temperature, or at 23°C and, thus, considered to be a liquid for the purposes of this description, although the plasticizer may actually be a viscous liquid at room temperature since it is to be appreciated that many plasticizers are polymeric in nature.

Representative examples of synthetic plasticizers are, for example, poly(ethylenevinyl alcohol), cellulose acetate and diesters of dibasic organic acids, so long as they have a softening point sufficiently below the softening point of the starch with which they are being combined so that the starch/plasticizer composite has the required softening point range.

Preferably, the synthetic plasticizer is selected from at least one of poly(ethylenevinyl alcohol) and cellulose acetate.

For example, the aforesaid poly(ethylenevinyl alcohol) might be prepared by polymerizing vinyl acetate to form a poly(vinylacetate) which is then hydrolyzed (acid or base catalyzed) to form the poly(ethylenevinyl alcohol). Such reaction of vinyl acetate and hydrolyzing of the resulting product is well known those skilled in such art.

For example, vinylalcohol/ethylene (60/40 mole ratio) copolymers can be obtained in powder forms at different molecular weights and crystallinities such as, for example, a molecular weight of about 11700 with an average particle size of about 11.5 microns or a molecular weight (weight average) of about 60,000 with an average particle diameter of less than 50 microns.

Various blends of starch and ethylenevinyl alcohol copolymers can then be prepared according to mixing procedures well known to those having skill in such art. For example, a procedure might be utilized according to a recitation in the patent publication by Bastioli, Bellotti and Del Trediu entitled A Polymer Composition Including Destructured Starch An Ethylene Copolymer, US-A-5,403,374.

Other plasticizers might be prepared, for example and so long as they have the appropriate Tg and starch compatibility requirements, by reacting one or more appropriate organic dibasic acids with aliphatic or aromatic diol(s) in a reaction which might sometimes be referred to as an esterification condensation reaction. Such esterification reactions are well known to those skilled in such art.

In the practice of this invention, the aforesaid inorganic fillers may be, for example, selected from one or more of kaolin clay, talc, short discrete fibers, thermoplastic powders such as polyethylene and polypropylene particles, or other reinforcing or non-reinforcing inorganic fillers.

Such additional inorganic fillers are intended to be exclusive of, or to not include, pigments conventionally used in the compounding, or preparation of, rubber compositions such as zinc oxide, titanium oxide and the like.

Such additional short fibers may be, for example, of organic polymeric materials such as cellulose, aramid, nylon and polyester.

In practice, the said starch/synthetic plasticizer composite has a moisture content in a range of zero to 30, alternatively one to six, weight percent.

In practice, as hereinbefore pointed out, the elastomer reinforcement may be
(A) the starch/plasticizer composite or
(B) a combination of the starch/plasticizer composite and at least one of carbon black and precipitated silica or
(C) a combination of the starch/plasticizer, carbon black and/or precipitated silica and at least one other inorganic filler, wherein a coupler is optionally used to couple the starch composite and the silica, if silica is used, to the diene based elastomer(s).

It is considered herein that, where desired, the starch composite can be used as
(A) a partial or
(B) complete replacement for carbon black and/or silica reinforcement for sulfur vulcanizable elastomers, depending somewhat upon the properties desired for the cured, or vulcanized, rubber composition.

In practice, it is generally preferred that the rubber reinforcing carbon black is used in conjunction with the starch composite in an amount of at least 5 and preferably at least 35 phr of carbon black, depending somewhat upon the structure of the carbon black. Carbon black structure is often represented by its DBP (dibutylphthalate) value. Reinforcing carbon blacks typically have a DBP number in a range of 40 to 400 cc/100 gm, and more usually in a range of 80 to 300 (ASTM D 1265). If the carbon black content is used with a view to providing an elastomer composition with a suitable electrical conductivity to retard or prevent appreciable static electricity build up, a minimum amount of carbon black in the elastomer composition might be, for example, 10 phr if a highly electrically conductive carbon black is used, otherwise usually at least 25 and often at least 35 phr of carbon black is used.

It is important to appreciate that, preferably, the starch composite is not used as a total replacement for carbon black and/or silica in an elastomer composition. Thus, in one aspect, it is considered that the starch composite is to be typically used as a partial replacement for carbon black and/or silica reinforcement for sulfur vulcanizable elastomers.

It is important to appreciate that, while the starch may be used in combination with the starch/plasticizer composite, they are not considered herein as equal alternatives. Thus, while starch might sometimes be considered suitable as a reinforcement for the elastomer composition together with the coupler, the starch/plasticizer composite itself may be considered more desirable for some applications, even when used without a coupler.

If silica is used as a reinforcement together with carbon black, the weight ratio of silica to carbon black is desirably in a weight ratio in a range of 0.1/1 to 10/1, thus at least 0.1/1, alternatively at least 0.9/1, optionally at least 3/1 and sometimes at least 10/1.

The weight ratio of said silica coupler to the starch composite and silica, if silica is used, may, for example, be in a range of 0.01/1 to 0.2/1 or even up to 0.4/1.

The starch is recited as being composed of amylose units and/or amylopectin units. These are well known components of starch. Typically, the starch is composed of a combination of the amylose and amylopectin units in a ratio of 25/75. A somewhat broader range of ratios of amylose to amylopectin units is recited herein in order to provide a starch for the starch composite which interact with the plasticizer somewhat differently. For example, it is considered herein that suitable ratios may be from 20/80 up to 100/0, although a more suitable range is considered to be 15/85 to 35/63.

The starch can typically be obtained from naturally occurring plants, as hereinbefore referenced. The starch/plasticizer composition can be present in various particulate forms such as, for example, fibrils, spheres or macromolecules, which may, in one aspect, depend somewhat upon the ratio of amylose to amylopectin in the starch as well as the plasticizer content in the composite.

The relative importance, if any, of such forms of the starch is the difference in their reinforcing associated with the filler morphology. The morphology of the filler primarily determines the final shape of the starch composite within the elastomer composition, in addition, the severity of the mixing conditions such as high shear and elevated temperature can allow to optimize the final filler morphology. Thus, the starch composite, after mixing, may be in a shape of one or more of hereinbefore described forms.

It is important to appreciate that the starch, by itself, is hydrophilic in nature, meaning that it has a strong tendency to bind or absorb water. Thus, the moisture content for the starch and/or starch composite has been previously discussed herein. This is considered to be an important, or desirable, feature in the practice of this invention because water can also act somewhat as a plasticizer with the starch and which can sometimes associate with the plasticizer itself for the starch composite such as polyvinyl alcohol and cellulose acetate, or other plasticizer which contain similar functionalities such as esters of polyvinyl alcohol and/or cellulose acetate or any plasticizer which can depress the melting point of the starch.

Various grades of the starch/plasticizer composition can be developed to be used with various elastomer compositions and processing conditions.

As hereinbefore pointed out, the starch typically has a softening point in a range of 180°C to 220°C, depending somewhat upon its ratio of amylose to amylopectin units, as well as other factors and, thus, does not readily soften when the rubber is conventionally mixed, for example, at a temperature in a range of 140°C to 165°C. Accordingly, after the rubber is mixed, the starch remains in a solid particulate form, although it may become somewhat elongated under the higher shear forces generated while the rubber is being mixed with its compounding ingredients. Thus, the starch remains largely incompatible with the rubber and is typically present in the rubber composition in individual domains.

However, it is now considered herein that providing starch in a form of a starch composite of starch and a plasticizer is particularly beneficial in providing such a composition with a softening point in a range of 110°C to 160°C.

The plasticizers can typically be combined with the starch such as, for example, by appropriate physical mixing processes, particularly mixing processes that provide adequate shear force.

The combination of starch and, for example, polyvinyl alcohol or cellulose acetate, is referred to herein as a "composite". Although the exact mechanism may not be completely understood, it is believed that the combination is not a simple mixture but is a result of chemical and/or physical interactions. It is believed that the interactions lead to a configuration where the starch molecules interact via the amylose with the vinyl alcohol, for example, of the plasticizer molecule to form complexes, involving perhaps chain entanglements. The large individual amylose molecules are believed to be interconnected at several points per molecule with the individual amylopectine molecules as a result of hydrogen bonding (which might otherwise also be in the nature of hydrophilic interactions).

This is considered herein to be beneficial because by varying the content and/or ratios of natural and synthetic components of the starch composite it is believed to be possible to alter the balance between hydrophobic and hydrophilic interactions between the starch components and the plasticizer to allow, for example, the starch composite filler to vary in form from spherical particles to fibrils.

In particular, it is considered herein that adding a polyvinyl alcohol to the starch to form a composite thereof, particularly when the polyvinyl alcohol has a softening point in a range of 90°C to 130°C, can be beneficial to provide resulting starch/plasticizer composite having a softening point in a range of 110°C to 160°C, and thereby provide a starch composite for blending well with a rubber composition during its mixing stage at a temperature, for example, in a range of 110°C to 165°C or 170°C.

In a further aspect of the invention, a tire is provided having at least one component comprised of the said starch/plasticizer composite-containing rubber composition of this invention. Although not limited thereto, such tire components can be at least one of tread, tread base or tread under tread, tire innerliner, sidewall apexes including run flat inserts, wedges for the tire shoulder, sidewall, carcass ply and breaker wire coating rubber compositions, bead insulation rubber composition and cushion or gumstrips for addition to various parts of the tire construction. As used herein, the tread and tread base may be collectively referred to herein as the "tread", or "circumferential tread". Such tire components are well known those skilled in such art.

As an aspect feature of this invention, a tire is provided having a circumferential tread comprised of the said rubber composition of this invention with the aforesaid tire component, thus, being its tread. As is well known to those skilled in such art, such tire tread is typically designed to be ground-contacting.

As a further aspect of this invention, a tire is provided with sidewall apexes of the said rubber composition of this invention.

Historically, the more homogeneous the dispersion of rubber compound components into the rubber, the better the resultant cured properties of that rubber. It is considered herein that it is a particular feature of this invention that the starch composite mixes with the rubber composition during the rubber mixing under high shear conditions and at a temperature in a range of 140°C to 165°C, in a manner that very good dispersion in the rubber mixture is obtained. This is considered herein to be important because upon mixing the elastomer composition containing the starch/plasticizer composite to a temperature to reach the melting point temperature of the composite, the starch composite will contribute to the development of high shearing forces which is considered to be beneficial to ingredient dispersion within the rubber composition. Above the melting point of the starch composite, for example, around 150°C, it will melt and maximize its reaction with the coupling agent.

In one aspect, such a rubber composition can be provided as being sulfur cured. The sulfur curing is accomplished in a conventional manner, namely, by curing under conditions of elevated temperature and pressure for a suitable period of time.

In the practice of this invention, as hereinbefore pointed out, the rubber composition is comprised of at least one diene-based elastomer, or rubber. Thus, it is considered that the elastomer is a sulfur curable elastomer. The diene based elastomer may be selected from at least one of homopolymers of isoprene and 1,3-butadiene and copolymers of isoprene and/or 1,3-butadiene with a aromatic vinyl compound selected from at least one of styrene and alphamethylstyrene. Accordingly such elastomer, or rubber, may be selected, for example, from at least one of cis 1,4-polyisoprene rubber (natural and/or synthetic, and preferably natural rubber), 3,4-polyisoprene rubber, styrene/butadiene copolymer rubbers, isoprene/butadiene copolymer rubbers, styrene/isoprene copolymer rubbers, styrene/isoprene/butadiene terpolymer rubbers, cis 1,4-polybutadiene rubber and medium to high vinyl polybutadiene rubber having a vinyl 1,2- content in a range of 15 to 85 percent and emulsion polymerization prepared butadiene/acrylonitrile copolymers. Such medium to high vinyl polybutadiene rubber may be more simply referred to herein as a high vinyl polybutadiene.

The rubber composition is preferably of at least two diene based rubbers.

In one aspect, an emulsion polymerization derived styrene/butadiene (E-SBR) might be used having a relatively conventional styrene content of 20 to 30 percent bound styrene or, for some applications, an E-SBR having a medium to relatively high bound styrene content, namely, a bound styrene content of 30 to 45 percent.

The relatively high styrene content of 30 to 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent.

Emulsion polymerization prepared styrene/butadiene/acrylonitrile copolymer rubbers (E-SBAR) containing 2 to 50 weight percent bound acrylonitrile in the terpolymer are also contemplated as diene based rubbers for use in this invention.

The solution polymerization prepared SBR (S-SBR) typically has a bound styrene content in a range of 5 to 50, preferably 15 to 45, percent. Its butadiene portion may have a vinyl content in a range of 10 to 70 percent. The S-SBR can be conveniently prepared, for example, by organo lithium catalyzation in the presence of an organic hydrocarbon solvent.

A purpose of using S-SBR is to enhance tire rolling resistance since it should tend to promote lower hysteresis for tire tread compositions.

The 3,4-polyisoprene rubber (3,4-PI) is considered beneficial for a purpose of enhancing the tire's traction when it is used in a tire tread composition.

The 3,4-PI and use thereof is more fully described in US-A- 5,087,668. The Tg refers to the glass transition temperature which can conveniently be determined by a differential scanning calorimeter at a heating rate of 10°C per minute.

The cis 1,4-polybutadiene rubber (BR) is considered to be beneficial for a purpose of enhancing the tire tread's wear, or treadwear.

Such BR can be prepared, for example, by organic solution polymerization of 1,3-butadiene.

The BR may be conveniently characterized, for example, by having at least a 90 percent cis 1,4-content.

The cis 1,4-polyisoprene and cis 1,4-polyisoprene natural rubber are well known to those having skill in the rubber art.

The rubber composition further comprises an adduct of maleic anhydride and polybutadiene. Suitable adducts of maleic anhydride and polybutadiene have a number average molecular weight in a range of 1,500 to 10,000; alternatively, of 2,500 to 7,500. Suitable adducts of maleic anhydride and polybutadiene have an average of from 2 to 20 functional groups based on maleic anhydride per polymer chain; alternatively, from 3 to 12. By functional groups based on maleic anhydride, it is meant the functional group resulting from the maleic anhydride being adducted onto the polybutadiene chain; such a functional group would be recognized as a saturated five-membered anhydride ring pendantly attached to the polymer chain, otherwise known as a succinoyl anhydride moiety. Suitable adducts of maleic anhydride and polybutadiene may be produced by any of the methods as are known in the art, for example, by the methods disclosed in US-A- 4,176,109. Some of the suitable adducts of maleic anhydride and polybutadiene commercially available are the Ricon and Ricobond series of materials from Sartomer. In one embodiment, the adduct of maleic anhydride and polybutadiene may be alternatively Ricobond 1731, Ricobond 1756, or from the Ricon 156MA or Ricon 130MA series.

The adduct of maleic anhydride and polybutadiene may be added to the rubber composition in amount sufficient to improve the interaction of the starch/plasticizer composite filler with the rubber matrix. The adduct of maleic anhydride and polybutadiene may be added in an amount ranging from 0.1 to 10 phr, alternatively, from 0.4 to 8 phr.

Suitable adducts of maleic anhydride and polybutadiene have a glass transition temperature, or Tg, in a range of -70°C to 0°C. The Tg of a particular adduct of maleic anhydride and polybutadiene is a function of the molecular weight, cis and trans content, and vinyl content of the polybutadiene chain, and maleic anhydride content, as will be apparent to one skilled in the art. For example, commercially available Ricobond 1731 with a molecular weight of 5,500 and a maleic anhydride content of 9 groups per chain has a Tg of -70°C. The ability to utilize adducts of maleic anhydride and polybutadiene of varying Tg is significant in the use of the invention. The selection of a particular adduct of maleic anhydride and polybutadiene having a particular Tg will allow for tailoring of certain physical properties of the rubber composition, due to the influence of the adduct of maleic anhydride and polybutadiene at the interface between the starch composite filler and the rubber matrix.

It is also of significance that the adduct of maleic anhydride and polybutadiene is dispersed in the rubber matrix, rather than coated directly onto the filler. Maleinized polybutadiene has previously been used as a coating on silica fillers, wherein the maleinized polybutadiene is applied to silica either directly from the melt or from a solution in organic solvent. In the present invention, such a coating of the adduct of maleic anhydride and polybutadiene on the starch composite filler would be much less effective than dispersing the adduct in the rubber matrix. It is believed that sufficient interaction of the adduct of maleic anhydride and polybutadiene with the interface of the starch composite filler is obtained only when the adduct is dispersed in the rubber matrix. Dispersion of the adduct as a coating directly on the starch composite filler would lead to encapsulation of the maleic anhydride groups and a reduction in the availability of the maleic anhydride groups to interact with both the starch composite filler and with the rubber matrix.

It is further believed that dispersion of the adduct of maleic anhydride and polybutadiene in the rubber matrix leads to the development of a relatively soft, core-shell interface or interphase between the starch composite filler and the rubber matrix. It is the development of this soft, core-shell interface or interphase that allows tailoring of the physical properties of the rubber composition.

The commonly employed siliceous pigments used in rubber compounding applications can be used as the silica in this invention, including pyrogenic and precipitated siliceous pigments (silica), although precipitate silicas are preferred.

The siliceous pigments preferably employed in this invention are precipitated silicas such as, for example, those obtained by the acidification of a soluble silicate, e.g., sodium silicate.

Such silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The silica may also be typically characterized by having a dibutylphthalate (DBP) absorption value in a range of 50 to 400, and more usually 100 to 300.

The silica might be expected to have an average ultimate particle size, for example, in the range of 0.01 to 0.05 micron as determined by the electron microscope, although the silica particles may be even smaller, or possibly larger, in size.

Various commercially available silicas may be considered for use in this invention such as, only for example herein, and without limitation, silicas commercially available from PPG Industries under the Hi-Sil trademark with designations 210, 243, etc; silicas available from Rhone-Poulenc, with, for example, Zeosil 1165MP and silicas available from Degussa AG with, for example, designations VN2 and VN3, as well as other grades of silica, particularly precipitated silicas, which can be used for elastomer reinforcement.

It is readily understood by those having skill in the art that the rubber composition would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

Typical amounts of tackifier resins, if used, comprise 0.5 to 10 phr, usually 1 to 5 phr. Typical amounts of processing aids comprise 1 to 50 phr. Such processing aids can include, for example, aromatic, napthenic, and/or paraffinic processing oils. Typical amounts of antioxidants comprise 1 to 5 phr. Representative antioxidants may be, for example, diphenyl-p-phenylenediamine and others, such as, for example, those disclosed in the Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 1 to 10 phr. Typical amounts of waxes comprise 1 to 5 phr. Often microcrystalline waxes are used. Typical amounts of peptizers comprise 0.1 to 1 phr.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 4 phr, or even, in some circumstances, up to 8 phr.

Accelerators are used to control the time and/or temperature required for vulcanization and to improve the properties of the vulcanizate. In one embodiment, a single accelerator system may be used, i.e., primary accelerator. Conventionally and preferably, a primary accelerator(s) is used in total amounts ranging from 0.5 to 4, preferably 0.8 to 1.5, phr. In another embodiment, combinations of a primary and a secondary accelerator might be used with the secondary accelerator being used in smaller amounts (of 0.05 to 3 phr) in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound. The presence and relative amounts of sulfur vulcanizing agent, or peroxide cure systems, and accelerator(s), if used, are not considered to be an aspect of this invention which is more primarily directed to the use of said starch composite as a reinforcing filler in combination with a coupler and carbon black and/or silica.

The presence and relative amounts of the above additives are not considered to be an aspect of the present invention which is more primarily directed to the utilization of specified blends of rubbers in rubber compositions, in combination with the said starch/plasticizer composite together with the adduct of maleic anhydride and polybutadiene, and optionally carbon black and/or optionally silica and/or non-carbon black or non-silica filler.

The mixing of the rubber composition can be accomplished by methods known to those having skill in the rubber mixing art. For example, the ingredients are typically mixed in at least two stages, namely, at least one non-productive stage followed by a productive mix stage. The final curatives are typically mixed in the final stage which is conventionally called the "productive" mix stage in which the mixing typically occurs at a temperature, or ultimate temperature, lower than the mix temperature(s) than the preceding non-productive mix stage(s). The rubber, starch composite, and fillers such as carbon black and optional silica and coupler, and/or non-carbon black and non-silica fillers, are mixed in one or more non-productive mix stages. The terms "non-productive" and "productive" mix stages are well known to those having skill in the rubber mixing art.

The rubber composition of this invention can be used for various purposes. For example, it can be used for various tire compounds. Such tires can be built, shaped, molded and cured by various methods which are known and will be readily apparent to those having skill in such art.

The invention may be better understood by reference to the following examples in which the parts and percentages are by weight unless otherwise indicated.

### EXAMPLE I

In this example, four adducts of maleic anhydride and polybutadiene were evaluated for their ability to affect the dispersion of a starch/plasticizer composite in a natural rubber composition. All compounds were made following the base composition shown in Table 1, with values given in phr (parts per hundred rubber). Starch composite and adducts of maleic anhydride and polybutadiene were added to the base composition to make Samples 1 through 6 as shown Table 2.

**Table 1**

| Natural rubber | 100 |
|---|---|
| Stearic acid | 2 |
| Wax | 1.5 |
| Zinc oxide | 2.5 |
| Sulfur | 3 |
| Accelerators | 2.5 |
| Antioxidants | 3 |

**Table 2**

| Sample | 1 | 2 | 3 | 4 | 5 | 6 |
|---|---|---|---|---|---|---|
| Starch Composite (1) | 0 | 30 | 30 | 30 | 30 | 30 |
| Adduct of MA/PBD(2) | 0 | 7 | 7 | 7 | 7 | 0 |

| | | | | | | |
|---|---|---|---|---|---|---|
| ¹A composite of starch and poly(ethylenevinyl alcohol) in a weight ratio of 1.5/1 and having a softening point according to ASTM No. D1228 of 147°C; wherein the starch is composed of amylose units and amylopectin units in a weight ratio of 1/3 and a moisture content of 5 weight percent obtained as Mater Bi 1128R from the Novamont - Montedison Company. | | | | | | |
| ²Adduct of maleic anhydride and polybutadiene: Sample 2 - Ricon 156MA17; MW = 1700, 3 maleic anhydride groups/chain; Sample 3 - Ricon 130MA13; MW = 2900, 4 maleic anhydrice groups/chain; Sample 4 - Ricobond 1756; MW = 1700, 3 maleic anhydride groups/chain; Sample 5 - Ricobond 1731; MW = 5500, 9 maleic anhydride groups/chain | | | | | | |

Samples 1 through 6 were mixed in a Werner-Pfleiderer 3.6L internal mixer and cured in a curing press at 160°C for 14 minutes. Each sample was then evaluated for dispersion of the starch/plasticizer composite filler in the rubber by analysis with a Dispergrader 1000 (Optigrade AB). Superior dispersion was judged as having fewer large size filler clusters in the sample. The results are shown in Table 3. As seen in Table 3, Sample 2 showed the best dispersion of the starch/plasticizer composite filler.

**Table 3**

| Sample | 1 | 2 | 3 | 4 | 5 |
|---|---|---|---|---|---|
| Particle size, µM | Number of Clusters | | | | |
| 3 through 6 | 238 | 476 | 402 | 422 | 412 |
| 6 through 9 | 243 | 463 | 409 | 435 | 428 |
| 9 through 11 | 310 | 453 | 528 | 578 | 559 |
| 11 through 14 | 234 | 256 | 410 | 482 | 445 |
| 14 through 17 | 164 | 121 | 288 | 414 | 380 |
| 17 through 20 | 75 | 38 | 154 | 266 | 249 |
| 20 through 23 | 34 | 14 | 92 | 175 | 161 |
| 23 through 26 | 15 | 4 | 36 | 98 | 85 |
| 26 through 29 | 3 | | 10 | 47 | 31 |
| 29 through 32 | 2 | 1 | 2 | 20 | 9 |
| 32 through 34 | | | 1 | 6 | 3 |
| 34 through 37 | | | | 2 | |
| 37 through 40 | | | | 1 | |

Sample 1 through 6 were tested for stress-strain behavior by ring modulus. The results are shown in Table 4. As seen in Table 4, each of Samples 2 through 6 showed an increase in stress at a given strain, indicated improved interaction between the filler and polymer matrix as compared with the control sample 1 with no added adduct of maleic anhydride and polybutadiene. Sample 2 showed the greatest increase in stress for a given strain, indicating the greatest improvement in interaction.

**Table 4**

| Sample | 1 | 2 | 3 | 4 | 5 | 6 |
|---|---|---|---|---|---|---|
| Strain, % | Stress, MPa | | | | | |
| 100 | 0.8 | 1.9 | 1.9 | 1.9 | 1.8 | 1.5 |
| 300 | 2.4 | 7 | 5.2 | 4.8 | 4.6 | 2.6 |

### EXAMPLE II

In this example, an adduct of maleic anhydride and polybutadiene was evaluated for its ability to affect the physical properties of a natural rubber composition including a starch/plasticizer composite.

Six samples (Samples 8 through 13) were prepared at varying concentrations of the maleic anhydride/polybutadiene adduct, as indicated by the compositions in Table 5. Additionally, three samples (Samples 14 through 16) were prepared with a silane coupling agent instead of the maleic anhydride/poiybutadiene adduct. All samples of Table 5 followed the base composition as indicated in Table 1. Sample 7 was a control sample with no added maleic anhydride/poiybutadiene adduct or silane. Samples 7 through 16 were mixed and cured following the procedures of Example 1. Each sample was then evaluated for the following physical properties.

Cure properties including minimum torque, maximum torque, and T90 by MDR at 160°C. Elongation at break, true tensile, 100 percent and 300 percent modulus, tensile strength, rebound, and shore A hardness by Ring Modulus at 23°C; samples cured 14 minutes at 160°C. Zwick rebound at 100°C by Zwick pendulum rebound tester; samples cured 14 minutes at 160°C. Delta T 15 by Goodrich flex; samples cured 14 minutes at 160°C. Tear strength by Nylon Strebler. Dispersion by Dispergrader. Tan Delta at 0.7 percent strain by Metavibe at constant sweep of 7.7 Hz. Loss modulus by Metravibe.

Results of the physical properties tests are shown in Tables 6 and 7.

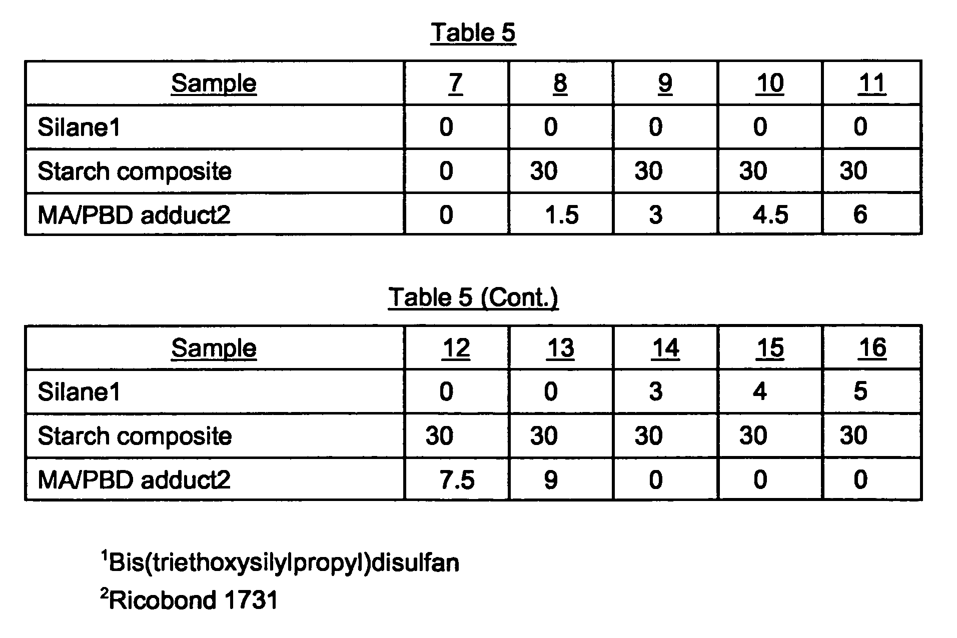

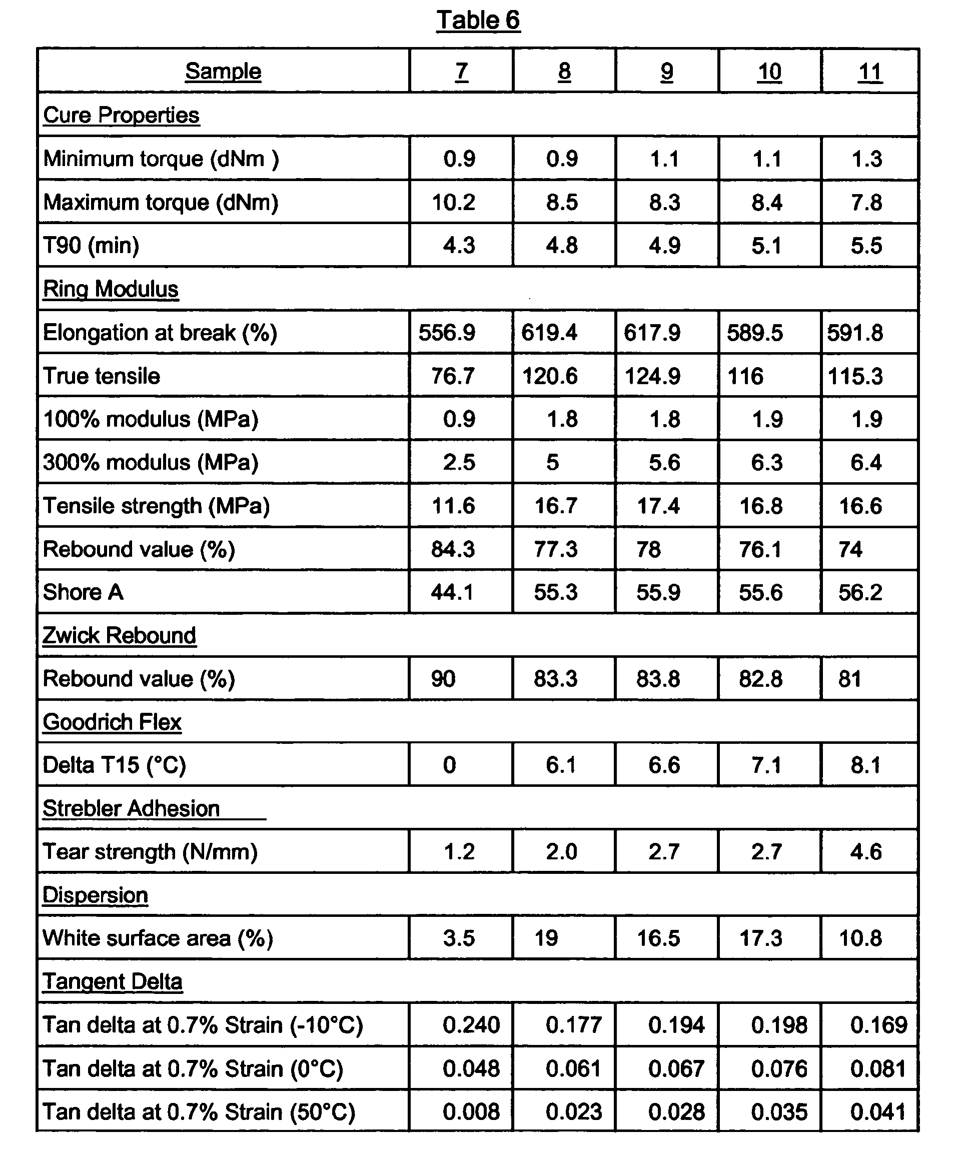

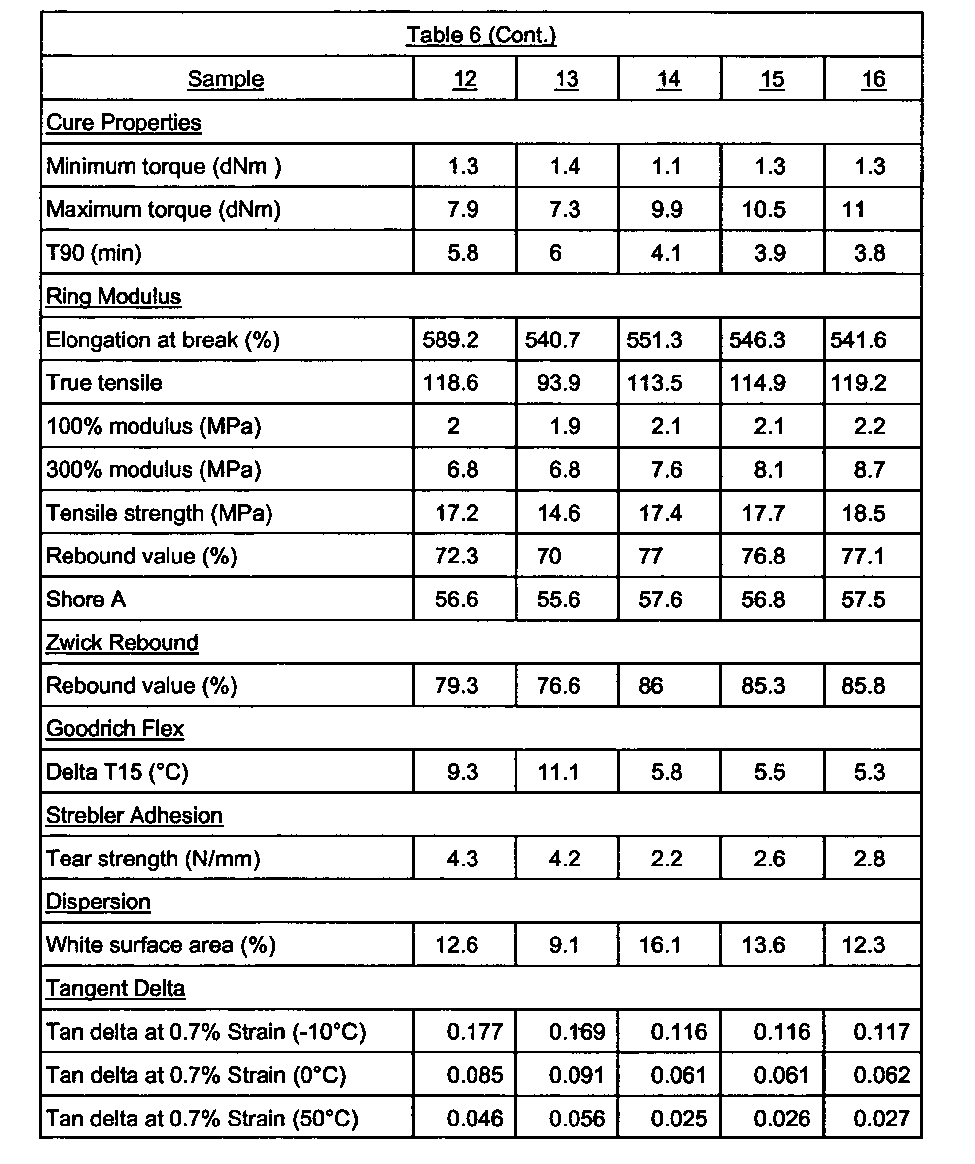

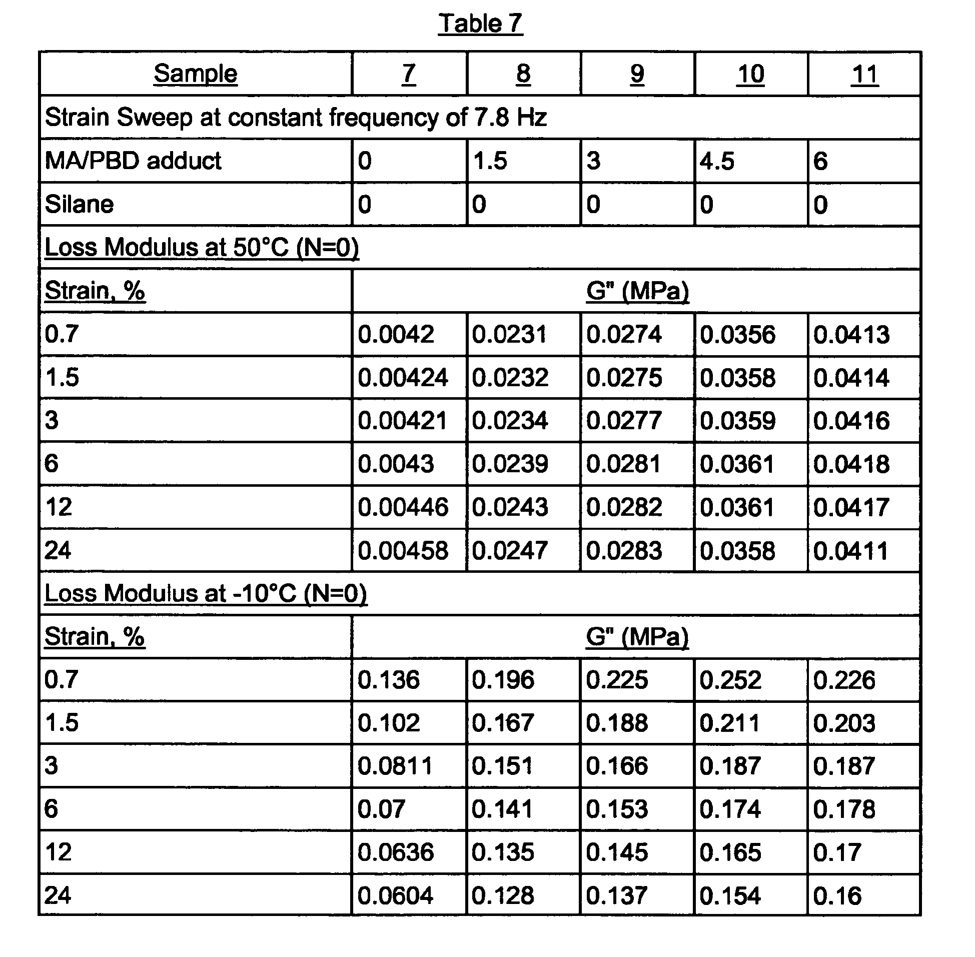

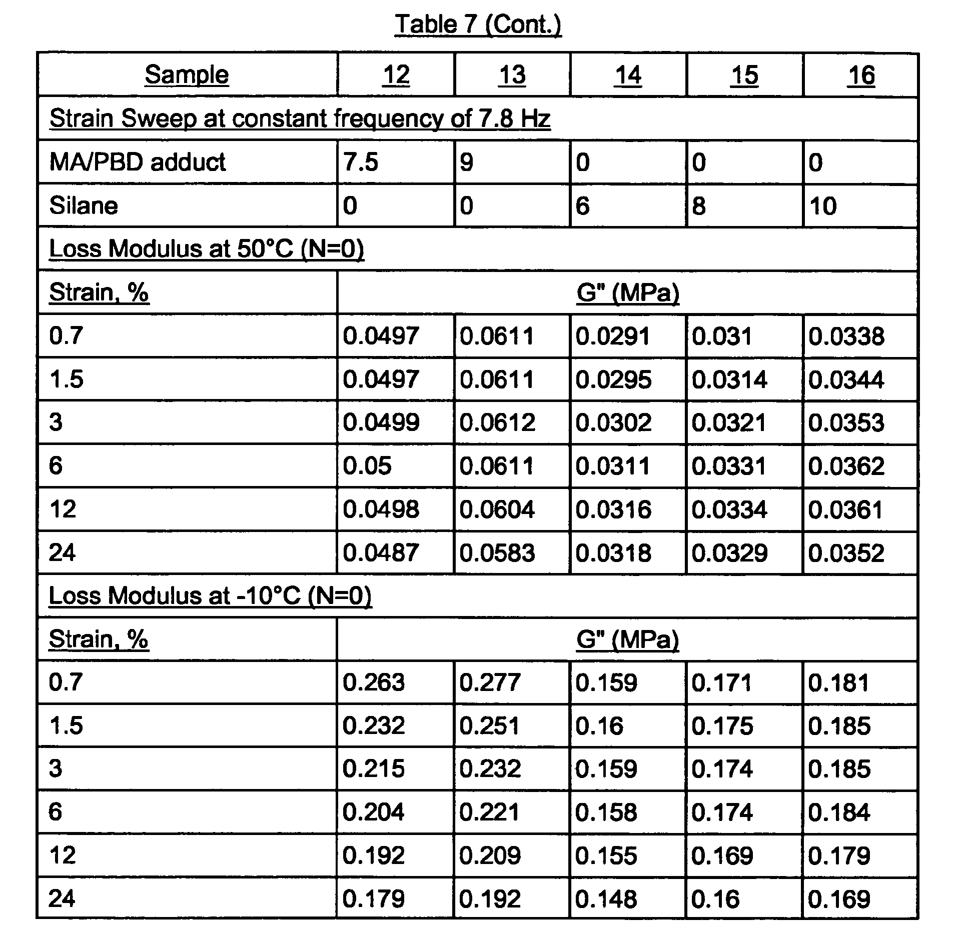

The data of Table 7 indicate that, for loss modulus measured at 50°C, a much wider range of values for G" exists for rubber compositions having the maleic anhydride/polybutadiene adduct than for rubber compositions having silane. The Dispergrader data in Table 6 indicate that the filler dispersion in the maleic anhydride/poiybutadiene adduct concentration range of 3 phr to 7.5 phr (Samples 9 through 12) was approximately equivalent to the filler dispersion in the silane concentration range of 3 phr to 5 phr (Samples 14 through 16). For these approximately equivalent levels of filler dispersion, the variation in G" with maleic anhydride/polybutadiene adduct concentration (from 0.028 to 0.05) was much greater than that for the silane (from 0.03 to 0.036). Such a wide variation in G" allows compound design to achieve a compromises between properties such as tear resistance and damping characteristics with the maleic anhydride/polybutadiene adduct that are not possible with the silane.

Table 7 also shows a comparison of the loss moduli at -10°C for samples containing maleic anhydride/polybutadiene adduct or silane. The loss modulus G" at -10°C for the silane compositions (Samples 14 through 16) was approximately constant over the strain range. By contrast, the loss modulus at-10°C for maleic anhydride/polybutadiene adduct compositions (Samples 8 through 13) was nonlinear over the strain range, similar to the unfilled composition (Sample 7). While not wishing to be bound by any theory, this behavior suggests that a core-shell interphase between the polymer matrix and the starch/plasticizer composite filler exists and remains soft at low temperature, and as a consequence can induce higher loss properties than is possible with the silane. The behavior of the 100 and 300 percent modulus also supports the idea of a soft core shell. For equivalent dispersion levels, the 100 and 300 percent moduli as shown in Table 6 are consistently lower for Samples 8 through 13 as compared with Samples 14 through 16. The lower stiffness at large strain may be attributable to the softer core shell with the adduct of maleic anhydride and polybutadiene, as compared to the silane. The tangent delta behavior at equal dispersion also supports the idea of a soft core shell. Table 6 shows that equal dispersion was obtained for 3 phr of the adduct of maleic anhydride and polybutadiene (Sample 9) and for 3 phr of silane (Sample 14). However, tan delta at -10°C is much higher for Sample 9 (.194) as compared to Sample 14 (0.116), while the tan delta at 50°C is approximately equal for Samples 9 and 14 (0.028 and 0.025). This suggest that core-shell remains soft at low temperatures for compositions including the adduct of maleic anhydride and polybutadiene, possibly due to the lower Tg as compared with the silane.

The loss modulus, 100 and 300 percent moduli, and tan delta behavior of Samples 8 through 13 as compared to the silane samples 14-16 is highly surprising and unexpected. As noted, this behavior indicates that the physical properties of the rubber composition may be tailored to provide a wider range of tear and hysteresis values than is possible with silane coupling agents. Other physical properties are equal or superior as compared with the silane.

## Claims

1. A vulcanizable rubber composition comprising:
(A) 100 parts by weight of at least one diene-based elastomer;
(B) from 1 to 60 phr of a starch/synthetic plasticizer composite; and
(C) from 0.4 to 8 phr of an adduct of maleic anhydride and polybutadiene.

2. The rubber composition of claim 1, wherein said adduct of maleic anhydride and polybutadiene has a number average molecular weight of from 1,500 to 10,000.

3. The rubber composition of claim 1 or 2, wherein said adduct of maleic anhydride and polybutadiene has an average of from 2 to 20 functional groups based on maleic anhydride per polymer chain.

4. The rubber composition of anyone of the previous claims, wherein said starch/synthetic plasticizer composite comprises starch composed of amylose units and amylopectin units in a ratio of 15/85 to 35/65, and has a softening point according to ASTM No. D1228 in a range of 180°C to 220°C, provided, however, that said starch/plasticizer composite has a softening point in a range of 110 to 160°C according to ASTM No. D1228.

5. The rubber composition of anyone of the previous claims, wherein said starch/synthetic plasticizer composite comprises a plasticizer that is a liquid at 23°C and is selected from at least one of poly(ethylenevinyl alcohol), cellulose acetate and plasticizers based, at least in part, upon diesters of dibasic organic acids and forms said starch/plasticizer composite having a softening point in a range of 110°C to 160°C when combined with said starch in a weight ratio in a range of 1/1 to 3/1.

6. The rubber composition of anyone of the previous claims, wherein said at least one diene elastomer is selected from the group consisting of homopolymers of isoprene and 1,3-butadiene and copolymers of isoprene and/or 1,3-butadiene with a aromatic vinyl compound selected from at least one of styrene and alphamethylstyrene.

7. The rubber composition of anyone of the previous claims, further comprising from 20 to 85 phr of carbon black.

8. The rubber composition of anyone of the previous claims, further comprising from 10 to 85 phr of silica.

9. A tire having at least one rubber component wherein said component is comprised of the rubber composition of claim 1.

## Patentansprüche

1. Eine vulkanisierbare Kautschukzusammensetzung, umfassend :
(A) 100 Gewichtsanteile zumindest eines dienbasierten Elastomers,
(B) 1 bis 60 ThK eines Kompositmaterials aus Stärke und synthetischem Weichmacher ; und
(C) 0,4 bis 8 ThK eines Addukts von Maleinsäureanhydrid und Polybutadien.

2. Die Kautschukzusammensetzung von Anspruch 1, wobei besagtes Addukt von Maleinsäureanhydrid und Polybutadien ein zahlenmittleres Molekulargewicht von 1.500 bis 10.000 hat.

3. Die Kautschukzusammensetzung von Anspruch 1 oder 2, wobei besagtes Addukt von Maleinsäureanhydrid und Polybutadien einen Durchschnitt von 2 bis 20 funktionellen Gruppen auf Basis von Maleinsäureanhydrid per Polymerkette aufweist.

4. Die Kautschukzusammensetzung gemäß einem der vorgenannten Ansprüche, wobei besagtes Stärke-Weichmacher-Kompositmaterial Stärke umfasst, die aus Amyloseeinheiten und Amylopektineinheiten in einem Verhältnis von 15 :85 bis 35 :65 zusammengesetzt ist und einen Erweichungspunkt gemäß ASTM Nr. D1228 in einem Bereich von 180 °C bis 220 °C hat, vorausgesetzt jedoch, dass besagtes Stärke-Weichmacher-Kompositmaterial einen Erweichungspunkt in einem Bereich von 110 bis 160 °C gemäß ASTM Nr. D1228 hat.

5. Die Kautschukzusammensetzung eines der vorgenannten Ansprüche, wobei besagtes Kompositmaterial aus Stärke und synthetischem Weichmacher einen Weichmacher umfasst, der auf 23 °C eine Flüssigkeit ist und aus wenigstens einem von Poly(ethylenvinylalkohol), Zelluloseacetat und Weichmachern, die wenigstens teilweise auf Diestern zweiwertiger organischer Säuren basiert sind, ausgewählt ist und besagtes Stärke-Weichmacher-Kompositmaterial bildet, das einen Erweichungspunkt in einem Bereich von 110°C bis 160 °C hat, wenn er mit besagter Stärke in einem Gewichtsverhältnis in einem Bereich von 1 :1 bis 3 :1 kombiniert wird.

6. Die Kautschukzusammensetzung eines der vorgenannten Ansprüche, wobei besagtes wenigstens eine Dienelastomer aus der aus Homopolymeren von Isopren und 1,3-Butadien und Copolymeren von Isopren und/oder 1,3-Butadien mit einer aromatischen Vinylverbindung, gewählt aus wenigstens einem von Styrol und Alphamethylstyrol, bestehenden Gruppe gewählt ist.

7. Die Kautschukzusammensetzung eines der vorgenannten Ansprüche, welche weiter 20 bis 85 ThK Carbon Black umfasst.

8. Die Kautschukzusammensetzung eines der vorgenannten Ansprüche, welche weiter 10 bis 85 ThK Silika umfasst.

9. Ein Reifen, der wenigstens ein Kautschukbauteil aufweist, wobei besagtes Bauteil aus der Kautschukzusammensetzung von Anspruch 1 besteht.

## Revendications

1. Composition de caoutchouc vulcanisable, comprenant :
(A) 100 parties en poids d'au moins un élastomère à base diénique ;
(B) de 1 à 60 phr d'un composite d'amidon/plastifiant synthétique ;
(C) de 0,4 à 8 phr d'un adduit d'anhydride maléique et de polybutadiène.

2. Composition de caoutchouc selon la revendication 1, dans laquelle ledit adduit d'anhydride maléique et de polybutadiène possède un poids moléculaire moyen en nombre de 1.500 à 10.000.

3. Composition de caoutchouc selon la revendication 1 ou 2, dans laquelle ledit adduit d'anhydride maléique et de polybutadiène possède en moyenne de 2 à 20 groupes fonctionnels à base d'anhydride maléique par chaîne polymère.

4. Composition de caoutchouc selon l'une quelconque des revendications précédentes, dans laquelle ledit composite d'amidon/plastifiant synthétique comprend de l'amidon composé d'unités d'amylose et d'unités d'amylopectine dans un rapport de 15/85 à 35/65 et possède un point de ramollissement conformément à la norme ASTM D 1228 dans la plage de 180°C à 220°C à condition toutefois que ledit composite d'amidon/plastifiant possède un point de ramollissement dans la plage de 110°C à 160°C conformément à la norme ASTM D1228.

5. Composition de caoutchouc selon l'une quelconque des revendications précédentes, dans laquelle ledit composite d'amidon/plastifiant synthétique comprend un plastifiant qui est un liquide à une température de 23°C et qui est choisi parmi au moins un membre du groupe comprenant un copolymère d'éthylène-alcool vinylique, de l'acétate de cellulose et des plastifiants basés au moins en partie sur des diesters d'acides organiques dibasiques et forme avec ledit composite d'amidon/plastifiant possédant un point de ramollissement dans la plage de 110 à 160°C lorsqu'il est combiné avec ledit amidon dans un rapport pondéral dans le domaine de 1/1 à 3/1.

6. Composition de caoutchouc selon l'une quelconque des revendications précédentes, dans laquelle ledit au moins un élastomère diénique est choisi parmi le groupe constitué par des homopolymères d'isoprène et du 1,3-butadiène et des copolymères d'isoprène et/ou du 1,3-butadiène avec un composé vinylaromatique qui représente au moins un membre choisi parmi le groupe comprenant le styrène et l'α-méthylstyrène.

7. Composition de caoutchouc selon l'une quelconque des revendications précédentes, comprenant en outre du noir de carbone à concurrence de 20 à 85 phr.

8. Composition de caoutchouc selon l'une quelconque des revendications précédentes, comprenant en outre de la silice à concurrence de 10 à 85 phr.

9. Bandage pneumatique possédant au moins un composant de caoutchouc, ledit composant comprenant la composition de caoutchouc selon la revendication 1.
